# EUROPEAN PATENT APPLICATION

(11) **EP 3 845 367 A1**
(43) Date of publication of application: **07.07.2021**
(21) Application number: 19220260.4
(22) Date of filing: 31.12.2019
(51) Int. Cl.: B29C 70/52, B33Y 70/00, B29K 105/26

(54) **PULTRUSION SYSTEMS FOR USE WITH THERMOPLASTIC WASTE PRODUCT**

(71) Applicant: SHPP Global Technologies B.V., 4612 PX Bergen op Zoom (NL)
(72) Inventor: PICARD, Philipp, 4612 PX Bergen op Zoom (NL); VERGHESE, Nikhil, 4612 PX Bergen op Zoom (NL)
(74) Representative: J A Kemp LLP

(57) **Abstract**

This disclosure describes pultrusion systems (100) and a method of operating such a pultrusion system. In a particular implementation, a method of operating a pultrusion system includes adjusting a temperature of a thermoplastic waste product (120, 200) in a first state within a chamber (102) of a pultrusion system to generate a thermoplastic waste product (120, 200) in a second state. The thermoplastic waste product (120, 200) can include one of a thermoplastic waste product (120, 200) having a first edge that is cut and an opposite edge that is not cut or a thermoplastic waste product (120, 200) having a fiber volume fraction that differs by 10% or more from a first portion to a second portion. The method also includes transferring the thermoplastic waste product (120, 200) in the second state into a die (104) of the pultrusion system. The method further includes removing the thermoplastic waste product (120, 200) in the second state from the die to form one or more thermoplastic products (122).

## Description

### TECHNICAL FIELD

The present disclosure relates generally to a pultrusion system, and, but not by way of limitation, to a pultrusion system for a printing filament or other thermoplastic product.

### BACKGROUND

During the production of a fiber-reinforced material, such as a tape (e.g., carbon fiber tape), a percentage of the material can be out-of-specification (e.g., have one or more characteristics, such as thickness, fiber volume content, fiber distribution, etc., that do not match a desired specification). For example, approximately 10% of the material may be out-of-specification. Where the material is tape, the edges or edge portions may be out-of-specification. Such out-of-specification tape, also referred to as thermoplastic waste product, is not effectively usable as tape for forming parts.

Pultrusion is a continuous process for the manufacture of materials with substantially constant cross-sections that pulls the material during the process, as compared to an extrusion process that pushes the material during the process. A pultrusion process may be used to form a material, such as a tape. To illustrate, such a pultrusion process receives fibers (e.g., carbon fibers), mixes the fibers with a heated resin (e.g., matrix material), and pulls the fibers and the resin through a die to generate the tape.

Recycling methods for thermoplastic composites, such as tapes, differ from recycling methods for neat thermoplastics (e.g., non-composite thermoplastics). To illustrate, recycling methods for neat thermoplastics often include incineration. However, some fibers, such as carbon fibers, can cause problems when incinerated. Instead of incineration, recycling methods for thermoplastic composites include mechanical recycling, chemical recycling, and thermal recycling. In the mechanical recycling process, the waste product is chopped and reprocessed in a hot press or extrusion process. In the chemical recycling process (e.g., solvolysis) the matrix of the waste product is solved and depolymerized, and the result can be used as feedstock for chemical processes. In the thermal recycling process (e.g., pyrolysis), the matrix of the waste product is thermally degraded to recover the fibers of the waste product. However, such processes do not recover the fibers at the same fiber length, which does not take advantage of the initial formation process of the waste product. Additionally, such processes can be complex and costly, decreasing their likelihood of use.

### SUMMARY

The present disclosure describes systems (e.g., pultrusion systems) and methods that enable recycling of a thermoplastic waste product, such as out-of-specification edge pieces removed from thermoplastic tape during formation of the thermoplastic tape. For example, the edge pieces may be collected and used as an input to a pultrusion system. The edge pieces may have a first edge that is not a cut edge (e.g., is irregular, such as curved or wavy) and an opposite edge that is a cut edge (e.g., is substantially straight) or may have a fiber volume fraction that differs by more than 10% from a first portion to a second portion, as non-limiting examples.

The pultrusion system may include a chamber for adjusting a temperature of a thermoplastic waste product in a first state to generate a thermoplastic waste product in a second state. The thermoplastic waste product in the second state may have a lower viscosity and/or be more deformable than the thermoplastic waste product in the first state. In some implementations, the temperature may be adjusted by heating the thermoplastic waste product in a preheating chamber. The pultrusion system also includes one or more pulling devices, such as rollers, pulleys, etc., configured to transfer (e.g., pull) the thermoplastic waste product from one component of the pultrusion system to the next. The pultrusion system also includes a die in sequence with the chamber such that the thermoplastic waste product in the second state is transferred into the die. The die is configured to additionally adjust the temperature, apply pressure, or both to impregnate the fibers of the thermoplastic waste product and to reshape the thermoplastic waste product (e.g., from a shape of a tape to a circular shape). The one or more pulling devices are further configured to remove the thermoplastic waste product in the second state from the die to generate one or more thermoplastic products. In some implementations, the one or more thermoplastic products are printing filaments. For example, the one or more printing filaments may be circular filaments that are used as input materials in a three-dimensional (3D) printing process. In other implementations, the one or more thermoplastic products include tow pregs or pellets. In some implementations, the pultrusion system includes a cooling die coupled to the die and configured to adjust the temperature of (e.g., cool) the one or more thermoplastic products.

Thus, the pultrusion system of the present disclosure is configured to convert thermoplastic waste product into useful thermoplastic products, such as printing filaments. This process enables recycling of otherwise unusable thermoplastic waste product (e.g., edge portions of tape) that are out-of-spec. For example, the thermoplastic waste product may be inconsistent in terms of thickness, fiber volume content, fiber distribution, or a combination thereof. Such inconsistencies may prevent the thermoplastic waste product from being used as tape, but the pultrusion process may cure these inconsistencies and generate usable printing filaments with the same fiber length as the original thermoplastic waste material. Thus, thermoplastic waste product may be recycled in a manner that preserves the fiber length of the thermoplastic waste product. Additionally, or alternatively, the pultrusion system may be faster and less complicated than conventional pultrusion systems that receive fibers as input, because there is no (or reduced) need to mix resin (e.g., thermoplastic resin) with the fibers to generate a material that can be used in the pultrusion process.

In some implementations, a resin sprayer or other structure for supplying resin, such as an extruder, is included in the pultrusion system. The resin sprayer or other structure is configured to introduce the thermoplastic waste product to additional resin to dilute the fiber volume fraction of the thermoplastic waste product to more closely match fiber volume fractions of commercially-available reinforced filaments or pellets. For example, the thermoplastic waste product may have a fiber volume fraction of up to 55% (or higher), while commercially-available reinforced filaments may have a fiber volume fraction of approximately 43%, and commercially-available pellets may have a fiber volume fraction of approximately 30%-55%. Thus, adding additional resin may make the end product (e.g., the printing filaments) more useful for 3D printing.

In some of the foregoing implementations of the present methods (e.g., of operating a pultrusion system), a method includes adjusting a temperature of a thermoplastic waste product in a first state within a chamber of the pultrusion system to generate a thermoplastic waste product in a second state. The thermoplastic waste product can include one of a thermoplastic waste product having a first edge that is cut and an opposite edge that is not cut or a thermoplastic waste product having a fiber volume fraction that differs by 10% or more from a first portion to a second portion. The method also includes transferring the higher-temperature thermoplastic waste product in the second state into a die of the pultrusion system. The method further includes removing the thermoplastic waste product in the second state from the die to form one or more thermoplastic products.

In some such implementations of the present methods, the one or more thermoplastic products include one or more printing filaments for use in three-dimensional (3D) printing. Alternatively, the one or more thermoplastic products include one or more tow pregs or one or more pellets. The method can further include cooling the thermoplastic waste product in the second state by transferring the thermoplastic waste product in the second state to a cooling die of the pultrusion system.

In some such implementations of the present methods, the thermoplastic waste product in the first state comprises out-of-specification tape. In some such embodiments, the out-of-specification tape is inconsistent in terms of thickness, fiber volume content, fiber distribution, or a combination thereof. The method can further include applying pressure to the thermoplastic waste product in the second state while the thermoplastic waste product in the second state is within the die.

In some of the foregoing implementations of the present systems (e.g., pultrusion systems), a pultrusion system includes a chamber configured to heat a thermoplastic waste product in a first state to generate a thermoplastic waste product in a second state The thermoplastic waste product can include one of a thermoplastic waste product having a first edge that is cut and an opposite edge that is not cut or a thermoplastic waste product having a fiber volume fraction that differs by 10% or more from a first portion to a second portion. The pultrusion system also includes a die disposed in sequence with the chamber. The pultrusion system further includes one or more pulling devices configured to transfer the thermoplastic waste product in the second state from the chamber to the die and to remove the thermoplastic waste product in the second state from the die to form one or more thermoplastic products.

In some of the foregoing implementations of the present systems, the pultrusion system further includes a cooling die configured to cool the thermoplastic waste product in the second state after the thermoplastic waste product in the second state is removed from the die. In some such implementations, the pultrusion system further includes a resin sprayer (or other structure, as discussed above) configured to mix the thermoplastic waste product in the first state with a resin to dilute the thermoplastic waste product in the first state. The one or more pulling devices can comprise one or more rollers.

In some of the foregoing implementations of the present systems, the die includes one or more inlets having a slit shape and one or more outlets having a circular shape. In some such implementations, each inlet of the one or more inlets is configured to receive a single piece of the thermoplastic waste product in the second state. Alternatively, each inlet of the one or more inlets is configured to receive multiple pieces of the thermoplastic waste product in the second state. In some implementations, the die includes one or more inlets having a first circular shape and one or more outlets having a second circular shape. In some such implementations, a size of the second circular shape is smaller than a size of the first circular shape.

In some of the foregoing implementations of the present control systems (for a pultrusion system and method of operating a pultrusion system), a control device for a pultrusion system comprises a processor and a memory coupled to the processor and storing instructions executable by the processor to perform one or more operations. The one or more operations include setting a temperature of a chamber of a pultrusion system. The chamber is configured to adjust a temperature of a thermoplastic waste product in a first state to generate a thermoplastic waste product in a second state. The thermoplastic waste product can include one of a thermoplastic waste product having a first edge that is cut and an opposite edge that is not cut or a thermoplastic waste product having a fiber volume fraction that differs by 10% or more from a first portion to a second portion. The one or more operations include controlling one or more pulling devices to transfer the thermoplastic waste product in the second state from the chamber to a die of the pultrusion system. The one or more operations also include controlling the die to provide an additional temperature change, pressure, or both to the thermoplastic waste product in the second state within the die. The one or more operations further include controlling the one or more pulling devices to remove the thermoplastic waste product in the second state from the die to generate one or more thermoplastic products.

In some of the foregoing implementations of the present control systems/control devices, the one or more operations further include controlling a cooling device to adjust the temperature of the thermoplastic waste product in the second state. In some such implementations, the cooling device includes a cooling die coupled to the die. The one or more operations further include initiating operation of a resin sprayer (or other structure, as discussed above) of the pultrusion system to introduce resin onto the thermoplastic waste product to dilute the thermoplastic waste product. In some such implementations, the resin includes a same type of resin as included in the thermoplastic waste product or a different type of resin as included in the thermoplastic waste product.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise.

The term "about" as used herein can allow for a degree of variability in a value or range, for example, within 10%, within 5%, or within 1% of a stated value or of a stated limit of a range, and includes the exact stated value or range. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed implementation, the term "substantially" may be substituted with "within [a percentage] of' what is specified, where the percentage includes .1, 1, or 5 percent; and the term "approximately" may be substituted with "within 10 percent of' what is specified. The statement "substantially X to Y" has the same meaning as "substantially X to substantially Y," unless indicated otherwise. Likewise, the statement "substantially X, Y, or substantially Z" has the same meaning as "substantially X, substantially Y, or substantially Z," unless indicated otherwise. The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or. Similarly, the phrase "A, B, C, or a combination thereof' or "A, B, C, or any combination thereof' includes: A alone, B alone, C alone, a combination of A and B, a combination of A and C, a combination of B and C, or a combination of A, B, and C.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1 % to about 5%" or "about 0.1 % to 5%" should be interpreted to include not just about 0.1 % to about 5%, but also the individual values (e.g., 1 %, 2%, 3%, and 4%) and the sub-ranges (e.g., 0.1 % to 0.5%, 1.1 % to 2.2%, 3.3% to 4.4%) within the indicated range.

The terms "comprise" (and any form of comprise, such as "comprises" and "comprising"), "have" (and any form of have, such as "has" and "having"), and "include" (and any form of include, such as "includes" and "including"). As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any implementation of any of the systems, methods, and article of manufacture can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb. Additionally, the term "wherein" may be used interchangeably with "where".

Further, a device or system that is configured in a certain way is configured in at least that way, but it can also be configured in other ways than those specifically described. The feature or features of one implementation may be applied to other implementations, even though not described or illustrated, unless expressly prohibited by this disclosure or the nature of the implementations.

Some details associated with the implementations are described above, and others are described below. Other implementations, advantages, and features of the present disclosure will become apparent after review of the entire application, including the following sections: Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1** is a block diagram of an example of a pultrusion system configured to use a thermoplastic waste product as an input.
**FIG. 2A** illustrates an example of a thermoplastic waste product.
**FIG. 2B** illustrates an example of a printing filament formed from the thermoplastic waste product.
**FIGS. 3A-3C** illustrate examples of dies usable in the pultrusion system of FIG. 1.
**FIG. 4** is a flowchart illustrating an example of a method of operating a pultrusion system.

### DETAILED DESCRIPTION

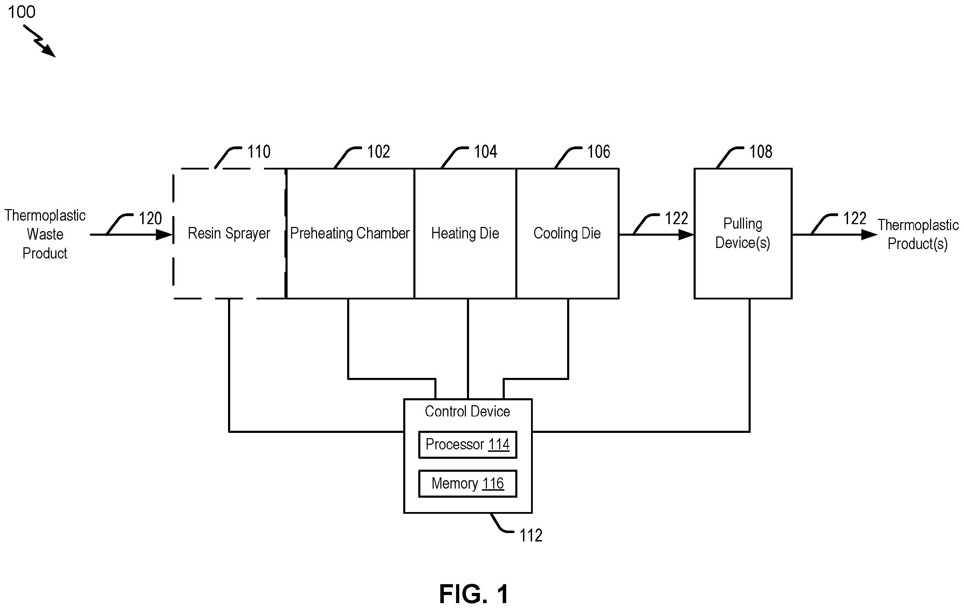

Referring to FIG. 1, shown is a block diagram of a system 100 (e.g., a pultrusion system) configured to use a thermoplastic waste product (that is out-of-specification, as further described herein) as an input material. System 100 includes a preheating chamber 102, a heating die 104, a cooling die 106, and one or more pulling devices 108. In some implementations, system 100 may optionally include a resin sprayer 110. Additionally, system 100 may include a control device 112.

Preheating chamber 102 is configured to receive thermoplastic waste product 120. For example, preheating chamber 102 may include a port or an inlet configured to receive thermoplastic waste product 120. In some implementations, thermoplastic waste product 120 is received from a spool. Thermoplastic waste product 120 may be a portion of a unidirectional fiber-reinforced thermoplastic tape, in some implementations. Inhomogeneity at the edges of the tape (e.g., inhomogeneity in terms of fiber volume fraction and degree of impregnation) may lead to the edges of the tape being designated as waste product. In some implementations, thermoplastic waste product 120 may have a first edge that is cut from such a tape and an opposite edge that is not cut and/or a fiber volume fraction that differs by 10% or more from a first portion of the thermoplastic waste product to a second portion of the thermoplastic waste product, as non-limiting examples.

Preheating chamber 102 may also be configured to adjust a temperature of thermoplastic waste product 120. For example, preheating chamber 102 may be configured to heat thermoplastic waste product 120 to change a state of thermoplastic waste product 120, as further described herein. In some implementations, preheating chamber 102 is configured to heat thermoplastic waste product 120 above a melt temperature of thermoplastic waste product 120. The melt temperature refers to a temperature at which the resin component of thermoplastic waste product 120 changes state from a solid to a liquid. Additionally, or alternatively, preheating chamber 102 may be configured to heat thermoplastic waste product 120 to a temperature that reduces the viscosity of the resin component of, and/or increases the deformability of, thermoplastic waste product 120 to a point that thermoplastic waste product 120 can change shape (either immediately or with the addition of additional heat and/or pressure). Deformability refers to a material's ability to change shape, which may be improved by converting the material from a solid to a liquid or semi-solid.

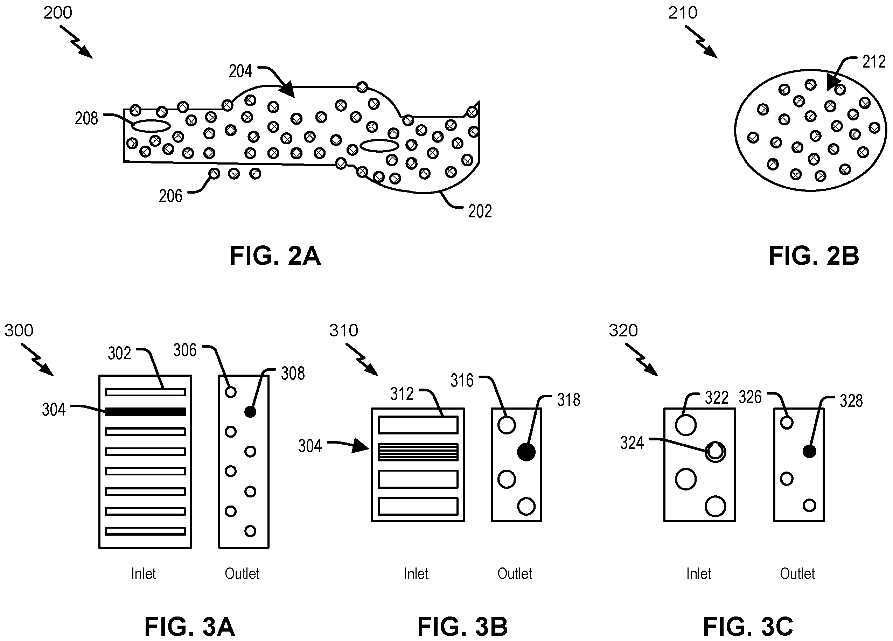

Heating die 104 is disposed in sequence with preheating chamber 102 (and may be coupled to preheating chamber 102). For example, an output port/outlet of preheating chamber 102 may be coupled to heating die 104. Heating die 104 is configured to receive thermoplastic waste product 120 after or from preheating chamber 102 and to apply additional temperature change, pressure, or both, to thermoplastic waste product 120. Heating die 104 may have an interior shape designed to change the shape of thermoplastic waste product 120 as thermoplastic waste product 120 is moved through heating die 104. Application of additional temperature change and/or pressure may cause thermoplastic waste product 120 to change shape, for example from the shape of a tape (e.g., a rectangular shape) to a circular shape. In some implementations, an inlet of heating die 104 has a first shape, and an outlet of heating die 104 has a second shape that is distinct from the first shape. For example, in some such implementations, the first shape is the shape of a tape (e.g., a rectangular shape) and the second shape is a circular shape. Alternatively, an inlet and an outlet of heating die 104 may have the same shape, but different sizes. Examples of various dies, including corresponding inlets and outlets, are further described with reference to FIGS. 3A-3C. The interior of heating die 104 between the inlet and outlet may be a cavity or channel that transitions from the first shape to the second shape to enable thermoplastic waste product 120 to change shape as it progresses through heating die 104. Heating die 104 may be designed according to the input and output material shape and to the impregnation process.

Cooling die 106 is coupled to heating die 104. Cooling die 106 is configured to receive thermoplastic waste product 120 after or from heating die 104 and to further adjust the temperature of thermoplastic waste product 120 after thermoplastic waste product 120 is removed from heating die 104. For example, cooling die 106 may cool thermoplastic waste product 120 to lower the temperature of thermoplastic waste product 120 and cause thermoplastic waste product 120 to become more viscous (e.g., not deformable), such as by cooling the thermoplastic waste product 120 below the melting temperature. Once removed from cooling die 106, the transformed thermoplastic waste product 120 may be in the form of one or more thermoplastic products 122.

Although described as two separate dies, such description is illustrative only. In other implementations, heating die 104 and cooling die 106 may be replaced by a single die that is first heated, then, after thermoplastic waste product 120 has traversed a chamber (e.g., cavity) of the die and changed shape, the die is cooled, to produce one or more thermoplastic products 122. Alternatively, another form of cooling may be used, such as a cooling chamber, air cooling, forced air application, a cooling bath, or other types of cooling, as non-limiting examples (instead of cooling die 106).

One or more pulling devices 108 are coupled to preheating chamber 102, heating die 104, and cooling die 106 (or to a portion of thermoplastic waste product 120 that runs through preheating chamber 102, heating die 104, and cooling die 106). One or more pulling devices 108 may include one or more rollers, one or more pulleys, or another type of pulling device. One or more pulling devices 108 may be configured to "pull" thermoplastic waste product 120 through the components of system 100 (e.g., to cause thermoplastic waste product 120 to be conveyed or transported through the components of system 100). Although illustrated as being disposed at the end of the system (e.g., subsequent to cooling die 106), one or more pulling devices 108 may be disposed, additionally or alternatively, in other locations throughout system 100.

In implementations that include resin sprayer 110, resin sprayer 110 may be configured to receive thermoplastic waste product 120. For example, resin sprayer 110 may include a port or inlet configured to receive thermoplastic waste product 120. Resin sprayer 110 may be configured to introduce thermoplastic waste product 120 to a resin to dilute thermoplastic waste product 120. For example, resin sprayer 110 may spray resin on thermoplastic waste product 120. The resin may be in the form of a film or fibers. The resin may dilute the fiber volume fraction in thermoplastic waste product 120. In some implementations, the resin includes a same type of resin as is included in thermoplastic waste product 120. In other implementations, the resin includes a different type of resin as is included in thermoplastic waste product 120. Although described as a resin sprayer, in other implementations, the resin may be mixed with thermoplastic waste product 120 in other manners, such as by use of an extruder.

Control device 112 includes a processor 114 and a memory 116. Memory 116 may include read only memory (ROM) devices (e.g., programmable read-only memory (PROM), erasable programmable read-only memory (EPROM), electrically erasable programmable read-only memory (EEPROM), optical storage, or the like), random-access memory (RAM) devices (e.g., synchronous RAM (SRAM), dynamic RAM (DRAM), synchronous dynamic RAM (SDRAM), or the like), one or more HDDs, flash memory devices, SSDs, other devices configured to store data in a persistent or non-persistent state, or a combination of different memory devices. Memory 116 may store instructions that, when executed by processor 114, cause processor 114 to perform the operations described herein. Although described as including processor 114, in other implementations, control device 112 can include application specific integrated circuits (ASIC), field-programmable gate arrays (FPGA), very large scale integrated (VLSI) circuits, or other circuitry. Additionally, control device 112 may include an interface, such as a wired interface or a wireless interface, to enable communication with one or more components of system 100. Control device 112 may also include a user interface to enable a user to control operations of system 100.

Control device 112 may be configured to control operations of one or more components of system 100. For example, control device 112 may operate preheating chamber 102 by setting a temperature within preheating chamber 102. As another example, control device 112 may control one or more of heating die 104 and/or cooling die 106, such as by setting temperatures or pressures applied by heating die 104 and/or cooling die 106. As yet another example, control device 112 may control operation of one or more pulling devices 108 to cause rotation of the one or more pulling devices 108 and pulling of thermoplastic waste product 120 through one or more components of system 100.

Although described as a single control device (e.g., a single processor), in other implementations, control device 112 may include multiple devices or processors (e.g., a processor system) that perform the control operations. For example, control device 112 may be a distributed system with multiple processors that each perform some of the control operations described herein. To further illustrate, a first device or processor may control operation of preheating chamber 102, a second device or processor may control operation of heating die 104 and/or cooling die 106, and a third device or processor may control operation of one or more pulling devices 108.

During operation of the system 100, thermoplastic waste product 120 in a first state is received at preheating chamber 102. Thermoplastic waste product 120 may include fibers and a matrix material (e.g., a resin). For example, thermoplastic waste product 120 may have been formed using an impregnation process. In some implementations, the fibers include one of carbon, glass, and ceramic fibers. In some implementations, the matrix material includes one of polycarbonate (PC), polypropylene (PP), polyamide (PA), and polystyrene (PS). In other examples, the fiber and/or the matrix material may include other materials.

In some implementations, thermoplastic waste product 120 includes one or multiple out-of-specification tapes. For example, the out-of-specification tape may be inconsistent in terms of thickness, fiber volume content, fiber distribution, or a combination thereof. An example of out-of-specification tape is further described with reference to FIG. 2A. In some implementations, tape produced may have at least one curved (or wavy) edge. Thermoplastic waste product 120 may include the edge that is cut off of the tape. Thus, thermoplastic waste product 120 may include a first edge that is irregular (e.g., curved or wavy) and an opposite edge that is substantially straight (e.g., the cut edge). In other implementations, thermoplastic waste product 120 may include an edge of the tape that has one or more voids. In other implementations, thermoplastic waste product 120 has a fiber volume fraction that differs by 10% or more from a first portion to a second portion. The out-of-specification tape may not be effectively usable as tape due to the inconsistencies. Thus, finding a use for the out-of-specification tape is desirable. Although described as out-of-specification tape, in other implementations, thermoplastic waste product 120 may be any type of thermoplastic material that would otherwise not be used (e.g., due to not meeting specifications, due to being over-produced, etc.).

Although described as receiving thermoplastic waste product 120 as an input, in some other implementations, a combination of thermoplastic waste product 120 and in-specification tape may be received as an input. For example, thermoplastic waste product 120 may be sandwiched between layers of in-specification tape, or in specification tape may be wrapped around thermoplastic waste product 120 in a circular shape (as further described with reference to FIG. 3C). In some other implementations, additional dry fibers may be added to or mixed with thermoplastic waste product 120 to form the input.

A temperature of thermoplastic waste product 120 in the first state is adjusted by preheating chamber 102 to generate thermoplastic waste product 120 in a second state. For example, preheating chamber 102 may heat thermoplastic waste product 120 to a temperature that decreases viscosity and/or increases deformability of thermoplastic waste product 120. Thus, the second state may have a lower viscosity and/or a higher deformability than the first state.

After the temperature is adjusted (e.g., after thermoplastic waste product is transitioned to the second state), one or more pulling devices 108 may transfer thermoplastic waste product 120 in the second state from preheating chamber 102 to heating die 104. While within heating die 104, additional temperature adjustment, pressure, or both, may be applied to thermoplastic waste product 120 in the second state. For example, heating die 104 may further heat thermoplastic waste product 120 and apply pressure to thermoplastic waste product 120. In some implementations, thermoplastic waste product 120 may be heated above its melting temperature. In some implementations, heating die 104 is a closed tool with varied internal cavity volume in order to provide the required consolidation pressure needed to homogenize thermoplastic waste product 120 and apply pressure on thermoplastic waste product 120 for impregnation and homogenization. Voids may be closed and thermoplastic waste product 120 may be reshaped from a first shape to a second shape. To illustrate, a cross-sectional shape (e.g., a perimeter) may be changed from a first cross-sectional shape to a second cross-sectional shape. For example, thermoplastic waste product 120 may be shaped from a flat shape (e.g., a shape of tape) to a circular filament shape, in some implementations. In some other implementations, thermoplastic waste product 120 may be shaped from a first circular shape (having a first size) to a second circular shape (having a second size that is smaller than the first size).

After further adjusting the temperature and/or applying pressure via heating die 104, one or more pulling devices 108 transfer thermoplastic waste product 120 in the second state into cooling die 106. Thermoplastic waste product 120 in the second state is cooled within cooling die 106 to decrease the temperature below the melting temperature and/or to increase the viscosity and/or decrease the deformability of thermoplastic waste product 120. Cooling die 106 is designed with a cavity of sufficient length to enable thermoplastic waste product 120 to retract from the walls of cooling die 106 as well as prevent delamination upon removal from cooling die 106. Although described as using two dies (e.g., heating die 104 and cooling die 106), in other implementations, a single die is used to perform the operations of both heating die 104 and cooling die 106.

After being cooled (and reshaped), thermoplastic waste product 120 is removed from cooling die 106 to form one or more thermoplastic products 122. In some implementations, one or more thermoplastic products 122 may be printing filaments (e.g., continuous reinforced printing filaments). One or more thermoplastic products 122 may have a same fiber length as thermoplastic waste product 120. For example, the pultrusion process may not change the fiber length of fibers included in the thermoplastic waste product 120 (e.g., the resulting one or more thermoplastic products retain the continuous carbon fibers of thermoplastic waste product 120). In implementations in which one or more thermoplastic products 122 are printing filaments, the printing filaments may be used in three-dimensional (3D) printing (e.g., as input materials). In some implementations, the printing filaments are circular printing filaments. A circular shape may reduce the sensitivity to thickness variation and provide a more homogenous distribution in the matrix of one or more printing filaments. In some implementations, the one or more thermoplastic products 122 are wound up on a spool and provided as an input material to a 3D printing process.

Thus, in some implementations, a continuous reinforced strand of filament is formed. For example, a die having a single cavity for each tape may be used to enable the production of small impregnated filaments. These small filaments may be used in a 3D printing process. In some other implementations, if the resultant circular cross-section is small enough, one or more thermoplastic products 122 include tow preg and are used to make parts with complex contours and shapes, for example by using an automated dispensing head mounted on a 6-axis robot, as a non-limiting example. In some implementations, one or more thermoplastic products 122 may be cut or compounded into pellets. For example, similar to other reinforced thermoplastics production techniques, the continuous carbon fiber reinforced strands can be cut into pellets after the pultrusion process. The pellets may have a larger diameter, thus multiple tapes may be used as inputs, as further described with reference to FIG. 3B.

In some implementations, one or more thermoplastic products 122 are printing filaments that may be used in a 3D printing system or device. For example, the 3D printing system or device may include a port (e.g., an inlet) to receive one or more printing filaments (e.g., printing filaments made from thermoplastic waste product 120). The 3D printing system may also include a printing means for forming a product from the one or more printing filaments. Many types of 3D printing could be used, and are also referred to as additive manufacturing.

In some implementations, prior to heating thermoplastic waste product 120 in the first state, thermoplastic waste product 120 is introduced to resin. For example, resin sprayer 110 may spray resin on thermoplastic waste product 120 to dilute a fiber volume fraction of thermoplastic waste product 120. In some implementations, an extruder is used in addition to or in lieu of a resin sprayer. In some implementations, the resin is the same type of resin as included in thermoplastic waste product 120. In some other implementations, the resin is a different type of resin as included in thermoplastic waste product 120. Resin sprayer 110 may configured to spray resin on thermoplastic waste product 120 to dilute the fiber volume fraction of the thermoplastic waste product to more closely match fiber volume fractions of commercially-available reinforced filaments or pellets. For example, thermoplastic waste product 120 may have fiber volume fractions up to, or between any two of, approximately 35%, 40%, 45%, 50%, and 55% (or higher), while commercially-available reinforced filaments may have a fiber volume fraction of approximately, or between any two of, 28%, 31%, 34%, 37%, 40% and 43%, and commercially-available pellets may have a fiber volume of, or between any two of, approximately 30%, 35%, 40%, 45%, 50%, and 55%. Thus, adding additional resin may make the end product (e.g., one or more thermoplastic products 122) more useful for 3D printing.

One or more of the above-described operations may be controlled by control device 112. To illustrate, processor 114 is configured to execute instructions stored in memory 116 to perform operations including setting a temperature of preheating chamber 102, controlling one or more pulling devices 108 to transfer thermoplastic waste product 120 from preheating chamber 102 to heating die 104, controlling heating die 104 to provide an additional temperature change, pressure, or both to thermoplastic waste product 120 within heating die 104, and controlling one or more pulling devices 108 to remove thermoplastic waste product 120 from heating die 104 to generate one or more thermoplastic products 122. For example, control device 112 (e.g., processor 114) may send one or more first control signals to preheating chamber 102 to set the temperature of preheating chamber 102. As another example, control device 112 (e.g., processor 114) may send one or more second control signals to a heating device coupled to heating die 104 to set the temperature of heating die 104. Additional control signals may be sent to other components of system 100 to control the above-described operations.

In some such implementations, the operations also include controlling a cooling device, such as cooling die 106, to adjust the temperature of thermoplastic waste product 120 to form one or more thermoplastic products 122. Additionally, or alternatively, the operations may include initiating operation of resin sprayer 110 to cause resin to be sprayed onto thermoplastic waste product 120 to dilute thermoplastic waste product 120, as described above.

In some implementations, a pultrusion system (e.g., 100) includes a chamber (e.g., 102) configured to heat a thermoplastic waste produce (e.g., 120) in a first state to generate a thermoplastic waste product in a second state. The thermoplastic waste product can include one of a thermoplastic waste product having a first edge that is cut and an opposite edge that is not cut or a thermoplastic waste product having a fiber volume fraction that differs by 10% or more from a first portion to a second portion. The pultrusion system also includes a die (e.g., 104) disposed in sequence with the chamber. The pultrusion system further includes one or more pulling devices (e.g., 108) configured to transfer the thermoplastic waste product in the second state from the chamber to the die and to remove the thermoplastic waste product in the second state from the die to form one or more printing filaments (e.g., 122).

Thus, FIG. 1 describes system 100 (e.g., a pultrusion system) that uses thermoplastic waste product 120, such as out-of-specification tape, to form one or more thermoplastic products 122, such as printing filaments that can be used in a 3D printing process. This enables waste product that would otherwise go unused to be recycled into a useful product, thereby increasing the revenue provided by the waste product. Additionally, because thermoplastic waste product 120 is already impregnated with the matrix material (e.g., the resin), the pultrusion process may be faster than conventional pultrusion processes (e.g., processes that include impregnating an input material with a matrix material). Further, implementations that include resin sprayer 110 (or other structure, such as an extruder) may improve the fitness of one or more thermoplastic products 122 for use in a 3D printing process by diluting the fiber volume fraction of the one or more thermoplastic products 122.

Referring to FIGS. 2A and 2B, a depiction a thermoplastic waste product and a printing filament are shown. FIG. 2A shows an example of a thermoplastic waste product 200. In some implementations, the thermoplastic waste product 200 may include or correspond to thermoplastic waste product 120 of FIG. 1.

In some implementations, thermoplastic waste product 200 may include portions, such as edges, of tape that was produced by a different process. As illustrated in FIG. 2A, thermoplastic waste product 200 may have inconsistencies that cause thermoplastic waste product 200 to be out-of-specification. For example, thermoplastic waste product 200 may include thickness variations, such as illustrative thickness variation 202. Due to such thickness variations, a thickness of a first portion of thermoplastic waste product 200 can be at least 2% (e.g., at least 2, 3, 4, 5, 6, 7, 8, 9, or 10%) different than a thickness of a second portion of the thermoplastic waste product. The first and second portions in this example and others-can be portions of thermoplastic waste product 200 that are positioned widthwise or lengthwise relative to one another along the thermoplastic waste product. And such portions can each have a width and a length that is each at least 2 mm (e.g., at least 2, 3, 4, 5, 6, 7, 8, 9, or 10 mm) and a thickness that is equal to the thickness of thermoplastic waste product 200 at that portion. For further example, a width of thermoplastic waste product 200, measured perpendicularly to the thermoplastic waste product's thickness, at a first portion of the thermoplastic waste product can be at least 2% (e.g., at least 2, 3, 4, 5, 6, 7, 8, 9, or 10%) different than a width of the thermoplastic waste product at a second portion of the thermoplastic waste product.

As another example, thermoplastic waste product 200 may include inhomogeneous fiber distribution 204 (e.g., the fibers and the matrix material/resin may be inhomogeneously distributed). To illustrate, thermoplastic waste product 200 may include voids, such as illustrative void 208. More particularly, thermoplastic waste product 200 (e.g., a 5 cm length of the same) may include a volume fraction of voids that is greater than 5% (e.g., greater than 5, 6, 7, 8, 9, or 10%). To further illustrate, a first portion of thermoplastic waste product 200 may have a fiber volume fraction that differs by at least 5% (e.g., at least 5, 6, 7, 8, 9, 10, 11, 12, 13, 14, or 15%) from a fiber volume fraction of a second portion of the thermoplastic waste product.

In some implementations, an edge of thermoplastic waste product 200 may be a cut edge (e.g., an edge that was cut from a tape), and an opposing edge may be an uncut edge. The uncut edge may be irregular (e.g., curved or wavy), and the cut edge may be substantially straight.

FIG. 2B shows an example of a printing filament 210. In some implementations, printing filament 210 may include or correspond to one or more thermoplastic products 122 of FIG. 1. Printing filament 210 has a consistent width (e.g., diameter) and has a substantially homogenous fiber distribution 212. Additionally, printing filament 210 is free from dry fibers and voids. The inconsistencies of thermoplastic waste product 200 may be removed by the pultrusion process described with reference to FIG. 1, specifically the heating in preheating chamber 102 and the additional heating and/or application of pressure by heating die 104. By heating thermoplastic waste product 200 and applying pressure to thermoplastic waste product 200, the inconsistencies may be cured and printing filament 210 may be formed. Because printing filament 210 does not have the inconsistencies, printing filament 210 may be used as an input material in a 3D printing process.

Referring to FIGS. 3A-3C, examples of dies used in a pultrusion system are shown. In some implementations, the dies illustrated in FIGS. 3A-3C may include or correspond to heating die 104, cooling die 106, or both (or a single die that replaces heating die 104 and cooling die 106) of FIG. 1.

FIG. 3A illustrates a first die 300. First die 300 includes one or more inlets, such as illustrative inlet 302, and one or more outlets, such as illustrative outlet 306. A shape of the inlets may be different than a shape of the outlets. For example, first die 300 may include one or more inlets having a slit shape (e.g., a rectangular shape) and one or more outlets having a substantially circular shape. In some such implementations, each of the inlets may be configured to receive a single piece of thermoplastic waste product (in the second state). For example, tape 304 (e.g., a thermoplastic waste product) may be inserted into an inlet, travel through first die 300 while being heated and having pressure applied, to result in formation of a printing filament 308 at an outlet. As illustrated in FIG. 3A, the printing filament may have a different shape (e.g., circular) than the tape (e.g., rectangular). The interior of first die 300 may include one or more cavities connecting the inlets to corresponding outlets. The cavities may be shaped such that the shape of the thermoplastic waste product changes as it is pulled through the first die 300.

First die 300 may be fabricated according to a first fabrication process. The first fabrication process includes forming a first inlet of a die. The first inlet has a first shape and is configured to receive a single piece of thermoplastic waste product at a time. The first fabrication process also includes forming a cavity (e.g., a chamber) within the die and coupled to the first inlet. The first fabrication process further includes forming a first outlet of the die coupled to the cavity. The first outlet has a second shape that is different than the first shape. In some implementations, the first shape is a shape of a tape (e.g., a rectangular shape), and the second shape is a circular shape. A first die formed by the process may include a first inlet having a first shape and configured to receive a single piece of thermoplastic waste product at a time, a first cavity (e.g., chamber) within the die and coupled to the first inlet, and a first outlet coupled to the first cavity and having a second shape that is different from the first shape.

FIG. 3B illustrates a second die 310. Second die 310 includes one or more inlets, such as illustrative inlet 312, and one or more outlets, such as illustrative outlet 316. A shape of the inlets may be different than a shape of the outlets. For example, second die 310 may include one or more inlets having a larger slit shape (e.g., a larger rectangular shape) and one or more outlets having a substantially circular shape. In some such implementations, each of the inlets may be configured to receive multiple pieces of thermoplastic waste product (in the second state). For example, a plurality of tapes 314 (e.g., pieces of thermoplastic waste product) may be inserted into an inlet, travel through second die 310 while being heated and having pressure applied, to result in formation of a printing filament 318 at an outlet. As illustrated in FIG. 3B, the printing filament may have a different shape (e.g., circular) than the tapes (e.g., rectangular). The interior of second die 310 may include one or more cavities connecting the inlets to corresponding outlets. The cavities may be shaped such that the shape of the thermoplastic waste product changes as it is pulled through the second die 310.

Second die 310 may be fabricated according to a second fabrication process. The second fabrication process includes forming a first inlet of a die. The first inlet has a first shape and is configured to receive multiple pieces of thermoplastic waste product at a time. The second fabrication process also includes forming a cavity (e.g., a chamber) within the die and coupled to the first inlet. The second fabrication process further includes forming a first outlet of the die coupled to the cavity. The first outlet has a second shape that is different than the first shape. In some implementations, the first shape is a shape of multiple tapes (e.g., a rectangular shape), and the second shape is a circular shape. A second die formed by the process may include a first inlet having a first shape and configured to receive multiple pieces of thermoplastic waste product at a time, a first cavity (e.g., chamber) within the die and coupled to the first inlet, and a first outlet coupled to the first cavity and having a second shape that is different from the first shape.

FIG. 3C illustrates a third die 320. Third die 320 includes one or more inlets, such as illustrative inlet 322, and one or more outlets, such as illustrative outlet 326. A shape of the inlets may be the same as a shape of the outlets. For example, third die 320 may include one or more inlets having a first circular shape and one or more outlets having a second circular shape. A size of the second circular shape may be smaller than a size of the first circular shape. For example, a radius, a diameter, and/or a circumference of the second circular shape may be smaller than a corresponding radius, diameter, and/or circumference of the first circular shape. In some such implementations, each of the inlets may be configured to receive a single piece of thermoplastic waste product (in the second state) or multiple pieces of thermoplastic waste product (or a piece of thermoplastic waste product and one or more thermoplastic tapes). For third die 320, the piece of thermoplastic waste product may be bent or rolled such that the piece of thermoplastic waste product may fit in a circular inlet. For example, a tape 324 (e.g., thermoplastic waste product) may be rolled and inserted into an inlet, travel through third die 320 while being heated and having pressure applied, to result in formation of a printing filament 328 at an outlet. In some other implementations, an in-specification tape may be outside the thermoplastic waste product to provide an in-specification layer surrounding the out-of-specification layer. As illustrated in FIG. 3C, the printing filament may have a different shape (e.g., circular) than the tapes (e.g., rectangular). The interior of third die 320 may include one or more cavities connecting the inlets to corresponding outlets. The cavities may be shaped such that the shape of the thermoplastic waste product changes as it is pulled through the second die 310. For example, the cavities may be conically shaped, which may make third die 320 easier to manufacture than first die 300 or second die 310.

Third die 320 may be fabricated according to a first third process. The third fabrication process includes forming a first inlet of a die. The first inlet has a first circular shape. The third fabrication process also includes forming a cavity (e.g., a chamber) within the die and coupled to the first inlet. The third fabrication process further includes forming a first outlet of the die coupled to the cavity. The first outlet has a second circular shape that has a different size than the first circular shape. A third die formed by the process may include a first inlet having a first shape, a first cavity (e.g., chamber) within the die and coupled to the first inlet, and a first outlet coupled to the first cavity and having a second shape that is different from the first shape.

Thus, FIGS. 3A-3C illustrate examples of dies that may be used in a pultrusion system. The dies 300, 310, and/or 320 may be used to transition thermoplastic waste product into printing filaments, which enables the thermoplastic waste product to be recycled and thus increase revenue associated with the thermoplastic waste product.

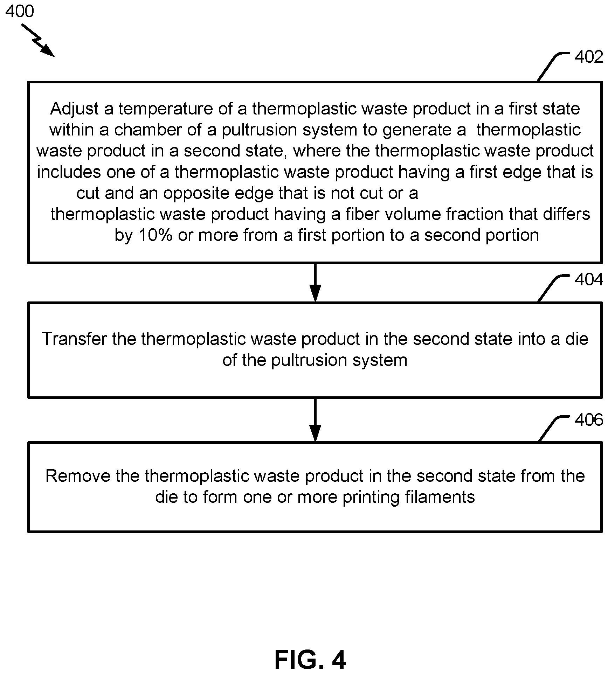

Referring to FIG. 4, an example of a method of operating a pultrusion system is shown. In some implementations, method 400 may be performed by system 100 of FIG. 1.

Method 400 includes adjusting a temperature of a thermoplastic waste product in a first state within a chamber of a pultrusion system to generate a thermoplastic waste product in a second state, at 402. For example, preheating chamber 102 may adjust a temperature of thermoplastic waste product 120 to transition thermoplastic waste product 120 from a first state to a second state. Thermoplastic waste product 120 may have lower viscosity and/or greater deformability in the second state than in the first state. Additionally, the thermoplastic waste product can include one of a thermoplastic waste product having a first edge that is cut and an opposite edge that is not cut or a thermoplastic waste product having a fiber volume fraction that differs by 10% or more from a first portion to a second portion.

Method 400 also includes transferring the thermoplastic waste product in the second state into a die of the pultrusion system, at 404. For example, one or more pulling devices 108 may transfer thermoplastic waste product 120 in the second state into heating die 104.

Method 400 further includes removing the thermoplastic waste product in the second state from the die to form one or more thermoplastic products, at 406. For example, thermoplastic waste product 120 may be removed from heating die 104 by one or more pulling devices 108 to form one or more thermoplastic products 122, such as printing filaments, tow pregs, or pellets, as non-limiting examples.

In some implementations, the one or more thermoplastic products include printing filaments for use in 3D printing. Alternatively, the one or more thermoplastic products include one or more tow pregs or one or more pellets. Additionally, or alternatively, method 400 may further include cooling the thermoplastic waste product in the second state by transferring the thermoplastic waste product in the second state to a cooling die of the pultrusion system. For example, thermoplastic waste product 120 in the second state may be transferred from heating die 104 to cooling die 106 by one or more pulling devices 108. While within cooling die 106, thermoplastic waste product may be cooled to prevent delamination and/or deformation when removing thermoplastic waste product from cooling die 106.

In some implementations, the thermoplastic waste product in the first state includes out-of-specification tape. In some such implementations, the out-of-specification tape is inconsistent in terms of thickness, fiber volume content, fiber distribution, or a combination thereof. Additionally, or alternatively, method 400 may further include applying pressure to the thermoplastic waste product in the second state while the thermoplastic waste product in the second state is within the die. For example, heating die 104 may apply pressure, and in some implementations, additional heat, to thermoplastic waste product 120 in the second state. Application of heat and/or pressure may remove inconsistencies, such as thickness, fiber volume content, fiber distribution, and/or void distribution from thermoplastic waste product 120.

Method 400 enables recycling of thermoplastic waste product (e.g., out-of-specification tape) by using the thermoplastic waste product to form one or more thermoplastic products, such as printing filaments that can be used in a 3D printing process. Recycling the thermoplastic waste product may increase revenue associated with the thermoplastic waste product. Additionally, because the thermoplastic waste product is already impregnated, to at least some degree, the process may be faster and less complex than conventional pultrusion processes.

The above specification and examples provide a complete description of the structure and use of illustrative implementations. Although certain implementations have been described above with a certain degree of particularity, or with reference to one or more individual implementations, those skilled in the art could make numerous alterations to the disclosed implementations without departing from the scope of this disclosure. As such, the various illustrative implementations of the methods and systems are not intended to be limited to the particular forms disclosed. Rather, they include all modifications and alternatives falling within the scope of the claims, and implementations other than the one shown may include some or all of the features of the depicted implementations. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one implementation or may relate to several implementations. Accordingly, no single implementation described herein should be construed as limiting and implementations of the disclosure may be suitably combined without departing from the teachings of the disclosure.

The claims are not intended to include, and should not be interpreted to include, means-plus- or step-plus-function limitations, unless such a limitation is explicitly recited in a given claim using the phrase(s) "means for" or "step for," respectively.

## Claims

1. A method for operating a pultrusion system, the method comprising:
adjusting a temperature of a thermoplastic waste product in a first state within a chamber of a pultrusion system to generate a thermoplastic waste product in a second state, wherein the thermoplastic waste product comprises one of a thermoplastic waste product having a first edge that is cut and an opposite edge that is not cut or a thermoplastic waste product having a fiber volume fraction that differs by 10% or more from a first portion to a second portion;
transferring the thermoplastic waste product in the second state into a die of the pultrusion system; and
removing the thermoplastic waste product in the second state from the die to form one or more thermoplastic products.

2. The method of claim 1, wherein the one or more thermoplastic products comprise one or more printing filaments for use in three-dimensional (3D) printing.

3. The method of claim 1, wherein the one or more thermoplastic products comprise one or more tow pregs or pellets.

4. The method of any of claims 1-3, further comprising cooling the thermoplastic waste product in the second state by transferring the thermoplastic waste product in the second state to a cooling die of the pultrusion system.

5. The method of any of claims 1-4, wherein the thermoplastic waste product in the first state comprises out-of-specification tape.

6. The method of claim 5, wherein the out-of-specification tape is inconsistent in terms of thickness, fiber volume content, fiber distribution, or a combination thereof.

7. The method of any of claims 1-6, further comprising applying pressure to the thermoplastic waste product in the second state while the thermoplastic waste product in the second state is within the die.

8. A pultrusion system comprising:
a chamber configured to heat a thermoplastic waste product in a first state to generate a thermoplastic waste product in a second state, wherein the thermoplastic waste product comprises one of a thermoplastic waste product having a first edge that is cut and an opposite edge that is not cut or a thermoplastic waste product having a fiber volume fraction that differs by 10% or more from a first portion to a second portion;
a die disposed in sequence with the chamber; and
one or more pulling devices configured to transfer the thermoplastic waste product in the second state from the chamber to the die and to remove the thermoplastic waste product in the second state from the die to form one or more thermoplastic products.

9. The pultrusion system of claim 8, further comprising a cooling die configured to cool the thermoplastic waste product in the second state after the thermoplastic waste product in the second state is removed from the die.

10. The pultrusion system of any of claims 8 or 9, further comprising a resin sprayer configured to mix the thermoplastic waste product in the first state with a resin to dilute the thermoplastic waste product.

11. The pultrusion system of any of claims 8-10, wherein the one or more pulling devices comprise one or more rollers.

12. The pultrusion system of any of claims 8-11, wherein the die comprises one or more inlets having a slit shape and one or more outlets having a circular shape.

13. The pultrusion system of claim 12, wherein each inlet of the one or more inlets is configured to receive a single piece of the thermoplastic waste product in the second state.

14. The pultrusion system of claim 13, wherein each inlet of the one or more inlets is configured to receive multiple pieces of the thermoplastic waste product in the second state.

15. The pultrusion system of any of claims 8-11, wherein the die comprises one or more inlets having a first circular shape and one or more outlets having a second circular shape, and wherein a size of the second circular shape is smaller than a size of the first circular shape.
